# EUROPÄISCHE PATENTSCHRIFT

(11) **EP 3 853 483 B1**
(45) Veröffentlichungstag und Bekanntmachung des Hinweises auf die Patenterteilung: **26.02.2025**
(21) Anmeldenummer: 19813771.3
(22) Anmeldetag: 29.11.2019
(51) Int. Cl.: F04D 29/16, F04D 29/28, F04D 29/30, F04D 29/68

(54) **TURBOVERDICHTER MIT ANGEPASSTER MERIDIANKONTUR DER SCHAUFELN UND VERDICHTERWAND**
TURBOCOMPRESSOR WITH ADAPTED MERIDIAN CONTOUR OF THE BLADES AND COMPRESSOR WALL
TURBOCOMPRESSEUR AVEC CONTOUR MÉRIDIEN ADAPTÉ DES AUBES ET DE LA PAROI DU COMPRESSEUR

(30) Priorität: 19.12.2018 DE 102018132978
(43) Veröffentlichungstag der Anmeldung: 28.07.2021
(73) Patentinhaber: ebm-papst Mulfingen GmbH & Co. KG, 74673 Mulfingen (DE)
(72) Erfinder: ENGERT, Markus, 97922 Lauda-Königshofen (DE); KLOSTERMANN, Angelika, 74653 Gaisbach (DE); CONRAD, Daniel, 74243 Langenbrettach (DE)
(74) Vertreter: Staeger & Sperling Partnerschaftsgesellschaft mbB
(86) Internationale Anmeldenummer: PCT/EP2019/083080
(87) Internationale Veröffentlichungsnummer: WO 2020/126413

(56) Entgegenhaltungen:
- WO-A1-2014/004238
- DE-A1- 102013 201 763
- DE-A1- 102013 201 771
- DE-A1- 102016 001 484
- DE-B- 1 057 137
- FR-A- 893 205

## Beschreibung

Die Erfindung betrifft einen Turboverdichter mit einem Verdichtergehäuse und einem Verdichterrad mit Schaufeln, bei dem das Verdichterrad drehbar gegenüber dem Verdichtergehäuse gelagert und über einen Kopfspalt zwischen abdeckfreien Schaufeloberkanten der Schaufeln und einer den Schaufeloberkanten zuweisenden Verdichterwand des Verdichtergehäuses beabstandet ist.

Bei Turboverdichtern gemäß dem Stand der Technik rotiert das mit Schaufeln ausgestattete Verdichterrad gegenüber dem feststehenden Verdichtergehäuse und erzeugt eine axial angesaugte und radial ausgeblasene Hauptströmung. Zwischen den Schaufeln des Verdichterrads und der Gehäusewand ist der möglichst klein zu haltende Kopfspalt vorgesehen, der die kontaktfreie Rotation des Verdichterrads ermöglicht. Der Kopfspalt verläuft in der Meridianebene des Verdichterrads gesehen entlang der Schaufeloberkante und der Gehäusewand, wobei sowohl die Gehäusewand als auch die Schaufeloberkante von der axialen Ansaugseite zur radialen Ausblasseite einen stetigen Verlauf aufweisen. Als Meridianebene wird bei Turboverdichtern jede in Umfangsrichtung gesehen durch die Rotationsachse verlaufende Ebene bezeichnet.

Problematisch ist, dass bei kleinen Massenströmen die Verdichterkennlinie, welche bestimmt ist durch eine Kennlinie konstanter Drehzahl im Diagramm Druckaufbau über Massenstrom, durch die Ablösegrenze der Strömung bzw. die Pumpgrenze aerodynamisch begrenzt ist.

Druckschriftlicher Stand der Technik im vorliegenden technischen Gebiet ist in den Dokumenten DE 10 2013 201 763 A1, DE 10 2016 001 484 A1 und WO 2014/004238 A1 offenbar Das Dokument FR 893 205 A offenbart einen Turboverdichter mit in einem Verdichtergehäuse angeordneten Verdichterrad mit abdeckfreien Schaufeloberkanten der Verdichterschaufeln, wobei die Schaufeloberkanten mit einer Mehrzahl von Erhöhungen und die gegenüberliegende Gehäusewand mit einer Mehrzahl von mit den Erhöhungen zusammenwirkenden Rücksprüngen versehen ist.

Der Erfindung liegt deshalb die Aufgabe zugrunde, die Verdichterkennlinie des Turboverdichters bei kleinen Massenströmen so zu verschieben, dass die Ablösegrenze der Strömung bzw. die Pumpgrenze in Richtung kleinerer Massenströme verschoben und dadurch der Betriebsbereich des Turboverdichters vergrößert wird. Gleichzeitig sollen der Wirkungsgrad und Druckaufbau gesteigert werden.

Diese Aufgabe wird durch die Merkmalskombination gemäß Patentanspruch 1 gelöst.

Erfindungsgemäß wird ein Turboverdichter mit einem Verdichtergehäuse und einem Verdichterrad mit Schaufeln vorgeschlagen, wobei das Verdichterrad drehbar gegenüber dem Verdichtergehäuse gelagert und über einen Kopfspalt zwischen abdeckfreien Schaufeloberkanten der Schaufeln und einer den Schaufeloberkanten zuweisenden Verdichterwand des Verdichtergehäuses beabstandet ist. Sowohl die Schaufeloberkanten der Schaufeln als auch die Gehäusewand weisen jeweils über ihre jeweilige Meridiankontur mindestens einen Rücksprung sowie mindestens eine Erhöhung auf, die lokal zusammenwirken, so dass der Kopfspalt im Bereich des Rücksprungs und der Erhöhung in einer Meridianebene gesehen einen Z-förmigen Verlauf bestimmt.

Über die besondere Gestaltung der zueinander weisenden Schaufeloberkanten und Gehäusewand wird innerhalb des Kopfspalts eine Rückströmung entgegen der axial angesaugten und radial ausgeblasenen Hauptströmung erzeugt. Die Schaufeloberkanten und die Gehäusewand weisen über den stetigen Meridianverlauf gesehen eine unstetige Kontur auf, die jeweils gebildet wird durch zusammenwirkende Rücksprünge und sich unmittelbar anschließende Erhöhungen an den Schaufeloberkanten und der Gehäusewand gegenüber dem stetigen Meridianverlauf. Der Z-förmige Verlauf des Kopfspalts wird bestimmt durch zwei Querschenkel und einen die Querschenkel verbindenden Verbindungsschenkel. Die Rücksprünge dienen dabei zur Formung der beiden Querschenkel, die Erhöhungen zur Bildung des einen Verbindungsschenkels.

Vorzugsweise sind die Rücksprünge der Schaufeloberkanten komplementär geformt zu der Erhöhung der Gehäusewand und die Rücksprünge der Gehäusewand komplementär geformt zu der Erhöhung der Schaufeloberkanten, um den Z-förmigen Verlauf des Kopfspaltes auszugestalten.

Die Rückströmung durch den Kopfspalt entgegen der durch das Verdichterrad erzeugten Hauptströmung trifft auf die Rücksprünge bzw. Erhöhungen der Schaufeloberkanten bzw. der Gehäusewand, erfährt dadurch eine Behinderung und strömt in die Hauptströmung zurück. Hierdurch werden die vorteilhaften und zur Lösung der Aufgaben dienenden Strömungseffekte erzielt.

Die Positionierung der Rücksprunge bzw. der komplementären Erhöhungen an den Schaufeloberkanten bzw. der Gehäusewand beeinflusst die Wirkung ebenfalls vorteilhaft. Dabei wird eine Meridianlänge L des Verdichterrads von dessen ansaugseitiger axialer Vorderkante zu dessen ausblasseitiger radialer Hinterkante zwischen den Werten 0<L<1 bestimmt. Bevorzugt und strömungstechnisch optimal ist eine Ausführung, bei welcher der mindestens eine Rücksprung sowie die mindestens eine Erhöhung der Gehäusewand und der Schaufeloberkanten in einem Bereich 0,3<L<0,7, weiter bevorzugt 0,4<L<0,5 ausgebildet sind.

In der Bildung des, in der Meridianebene gesehen, Z-förmigen Verlaufs des Kopfspalts ist erfindungsgemäß vorgesehen, dass die Gehäusewand und die Schaufeln jeweils aufeinander zugerichtete Anschlagflächen für einen Strömung durch den Kopfspalt aufweisen. Die Anschlagflächen erstrecken sich somit senkrecht oder gewinkelt gegenüber dem im Meridianverlauf gesehen vorherigen oder nachfolgenden Strömungsabschnitt des Kopfspalts, so dass die Rückströmung durch den Kopfspalt gegen die Anschlagfläche prallt und in die entgegengesetzt verlaufende Hauptströmung zurückgeführt wird. Dadurch, dass Rücksprünge und Erhöhungen sowohl an den Schaufeloberkanten als auch an der Gehäusewand vorgesehen sind, erstrecken sich die Anschlagflächen zwar senkrecht oder im Wesentlichen senkrecht zur Rückströmung, gleichwohl bleibt der Kopfspalt im gesamten Bereich zwischen Verdichterrad und Verdichtergehäuse erhalten, d.h. auch im Bereich Z-förmigen Abschnitt der Rücksprünge und Erhöhungen. Erfindungsgemäß ist weiter vorgesehen, dass dass die Anschlagflächen gegenüber einer Senkrechten zu einer Tangente des Meridianverlaufs der Gehäusewand und/oder der Schaufeloberkanten des Verdichterrads parallel in einem Winkel α=±15° verlaufen.

In einer vorteilhaften Ausführungsvariante verlaufen die Anschlagflächen an der Gehäusewand und den Schaufeloberkanten gegenüber einer zur Rotationsachse des Verdichterrads senkrechten Axialebene parallel in einem Winkel α, der zur Ansaugseite des Verdichterrads weisend größer ist als 0°, vorzugsweise 15-45°. Dadurch wird ermöglicht, dass die Anschlagfläche an der Gehäusewand zur Hauptströmung geneigt ausgerichtet ist und die Rückströmung im Kopfspalt bereits über die Anschlagfläche zurück in Richtung der Hauptströmung umgelenkt wird.

In einem Ausführungsbeispiel des Turboverdichters ist vorgesehen, dass der Kopfspalt eine konstante Kopfspaltbreite aufweist. Die "Kopfspaltbreite" wird dabei durch den Abstand zwischen der Schaufeloberkante und der Gehäusewand bestimmt. Dies wird durch eine exakt komplementäre Form der Erhöhungen und Rücksprünge an den Schaufeloberkanten und der Gehäusewand über den gesamten Verlauf der Meridiankontur erreicht.

Hierzu alternative Ausführungsbeispiele des Turboverdichters sind dadurch gekennzeichnet, dass der Kopfspalt in einem an die ansaugseitige Schaufelkante angrenzenden Abschnitt eine erste Kopfspaltbreite a, in einem an die ausblasseitige Schaufelkante angrenzenden Abschnitt eine zweite Kopfspaltbreite b und in einem im Bereich des Rücksprungs und der Erhöhung eine sich zwischen den Anschlagflächen erstreckende radiale Kopfspaltlänge c aufweist, wobei vorgesehen wird, dass die Kopfspaltbreiten bzw. Kopfspaltlänge a<c<b (erste Variante) oder a>c>b (zweite Variante) ist. Bei der ersten Variante verkleinert sich der Durchströmungsquerschnitt des Kopfspalts von axial ansaugseitig zu radial ausblasseitigen Abschnitten, bei der zweiten Variante vergrößert er sich. Dies wird als Ausführungsvariante umgesetzt durch einseitig, d.h. nur bei den Schaufeloberkanten oder nur an der Gehäusewand vorgesehene vergrößerte Rücksprünge oder alternativ vergrößerte Erhöhungen.

Als weitere Ausführung sind auch Turboverdichter umfasst, bei denen sowohl die Schaufeloberkanten der Schaufeln als auch die Gehäusewand jeweils über ihre jeweilige Meridiankontur mehrere Rücksprunge sowie mehrere Erhöhungen aufweisen, die jeweils lokal zusammenwirken, so dass der Kopfspalt im Bereich der Rücksprünge und der Erhöhungen in der Meridianebene gesehen einen sich wiederholenden Z-förmigen Verlauf bestimmen. In anderen Worten kann sich die besondere unstetige Kontur über die meridionale Länge der Schaufeln wiederholen.

In einer Weiterbildung ist der Turboverdichter dadurch gekennzeichnet, dass das Verdichterrad Schaufeln mit jeweils unterschiedlicher Axialerstreckung aufweist, die in Umfangsrichtung abwechselnd zueinander angeordnet und in Umfangsrichtung gekrümmt sind. Die Schaufeln mit kürzerer Axialerstreckung sind vorzugsweise als Zwischenschaufeln (auch Splitterschaufeln benannt) zwischen Schaufeln mit größerer Axialerstreckung angeordnet.

In einer besonderen Ausgestaltung überdecken die Schaufeln mit größerer Axialerstreckung die Zwischenschaufeln in einer ansaugseitigen axialen Draufsicht bzw. Projektion des Verdichterrads. Dies wird durch die gekrümmte Form der Schaufeln mit größerer Axialerstreckung realisiert, welche in einem Bereich des Umfangs des Verdichterrads weiter läuft, in dem die Zwischenschaufeln nicht verlaufen.

Eine weitere Ausführungsvariante sieht bei dem Turboverdichter vor, dass zumindest oder ausschließlich die Schaufeln mit größerer Axialerstreckung über ihre jeweilige Meridiankontur den mindestens einen Rücksprung sowie die mindestens eine Erhöhung aufweisen. Das bedeutet, dass auch Verdichterräder mit Zwischenschaufeln umfasst sind, deren Meridiankontur stetig und ohne Rücksprünge und Erhebungen verläuft.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Turboverdichter geschnitten in der Meridianebene gemäß einem ersten Ausführungsbeispiel;
- Fig. 2: der Turboverdichter gemäß Figur 1;
- Fig. 3: eine Detailansicht des Kopfspalts des Turboverdichters gemäß Figur 1 und 2;
- Fig. 4: das Verdichterrad des Turboverdichters gemäß Figur 1 und 2 in einer perspektivischen Ansicht
- Fig. 5: ein alternatives Ausführungsbeispiel eines Verdichterrads in einer perspektivischen Ansicht.

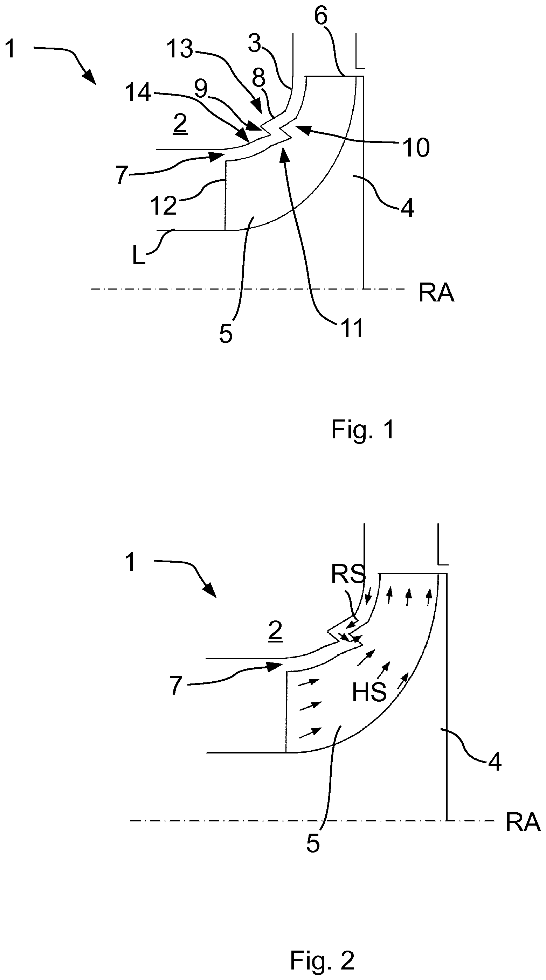

In den Figuren 1 und 2 ist schematisch ein Ausschnitt eines Turboverdichters 1 geschnitten in der Meridianebene dargestellt. Gezeigt sind nur die für die Erfindung relevanten Bereiche des Turboverdichters, im Übrigen greift der Fachmann auf den aus dem Stand der Technik bekannten Aufbau zurück.

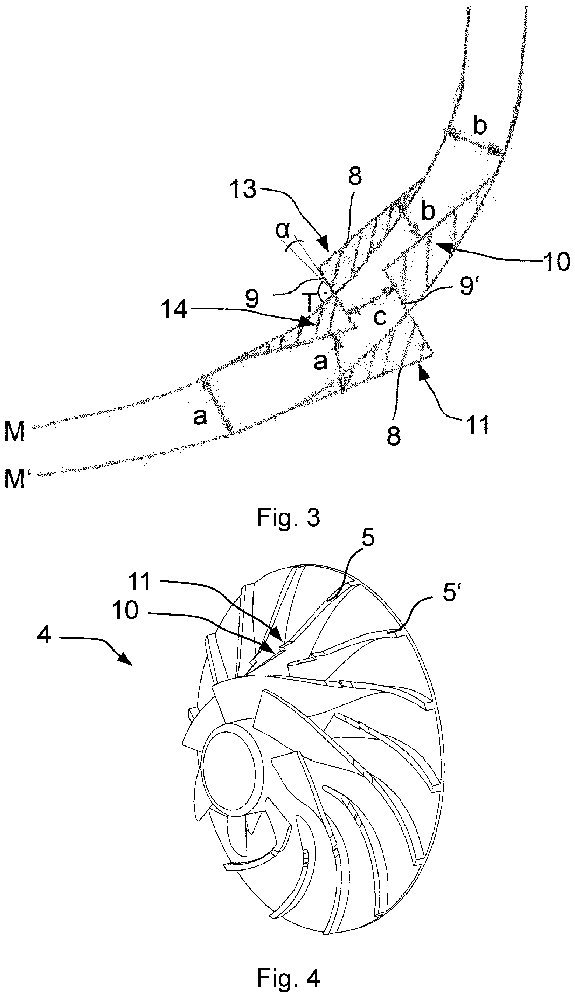

Der Turboverdichter 1 umfasst das Verdichtergehäuse 2 und das Verdichterrad 4 mit den in Umfangsrichtung verteilt angeordneten Schaufeln 5. Das Verdichterrad ist zudem in Figur 4 dargestellt. Angetrieben von einem Motor (nicht gezeigt) rotiert das Verdichterrad 4 um die Rotationsachse RA. Es saugt dabei axial Luft an und bläst diese radial aus. Eine entsprechende Hauptströmung HS ist in Figur 2 gezeigt.

Zwischen der feststehenden Gehäusewand 3 des Verdichtergehäuses 2 und den Schaufeloberkanten der Schaufeln 5 ist der Kopfspalt 7 vorgesehen, der eine Rotation des Verdichterrads 4 ermöglicht. Die Schaufeloberkanten sind abdeckungsfrei, d.h. nicht von einer Deckscheibe überdeckt.

Entlang ihrer jeweiligen Meridiankontur sind sowohl die Schaufeloberkanten der Schaufeln 5 als auch die Gehäusewand 3 derart angepasst, dass eine durch den Kopfspalt 7 strömende Rückströmung RS (siehe Figur 2) in die entgegengesetzte Richtung umgelenkt und der Hauptströmung HS wieder zugeführt wird. Hierzu sind auf den Schaufeloberkanten der Schaufeln 5 gegenüber dem Meridianverlauf in Strömungsrichtung der Hauptströmung HS von der ansaugseitigen Vorderkante 12 des Verdichterrads 4 zu dessen ausblasseitiger Hinterkante 6 gesehen ein Rücksprung 11 sowie eine Erhöhung 10 vorgesehen. In komplementärer Form ist die Gehäusewand 3 mit dem Rücksprung 13 gegenüberliegend zur Erhöhung 10 der Schaufel 5 und der Erhöhung 14 gegenüberliegend zu dem Rücksprung 11 der Schaufel 5 gebildet. Die unstetige Meridiankontur führt dazu, dass der Kopfspalt 7 in einer Meridianebene gesehen einen Z-förmigen Verlauf bestimmt, wobei dieser in der Ansicht gemäß der Fig. 1 und 2 gespiegelt ist.

Der Z-förmige bzw. gespiegelt Z-förmige Verlauf, je nachdem von welcher Seite auf die Schaufeln 5 gesehen wird, führt zudem dazu, dass die Gehäusewand 3 und die Schaufeln 5 jeweils zwei gegenüber dem Meridianverlauf eingezogene Querschenkel 8 sowie aufeinander zugerichtete Anschlagflächen 9, 9' für die Strömung durch den Kopfspalt 7 aufweisen. Bei der gezeigten Ausführung stellt die Anschlagfläche 9 der Gehäusewand 3 das wesentliche Hindernis für die Rückströmung RS dar und leitet die Rückströmung RS zurück in die Hauptströmung HS. Die Anschlagflächen 9, 9' sind gegenüber einer Senkrechten zur Tangente T des Meridianverlaufs der Gehäusewand 3 bzw. der Schaufeloberkanten des Verdichterrads 4 in einem Winkel α geneigt (siehe Figur 3). Der Winkel α liegt erfindungsgemäß in einem Bereich von ±15°, in der gezeigten Ausführung bei -10°. Der Z-förmige Verlauf wird somit hin zu einem blitzförmigen Verlauf mit deutlicher Umkehrrichtung der Anschlagfläche 9 zurück in die Hauptströmung HS und mithin verbesserter Rückführung der Rückströmung RS.

Die entsprechende Ausbildung der Gehäusewand 3 und der Schaufeloberkanten der Schaufeln 5 ist detaillierter in Figur 3 gezeigt. Dabei ist deutlich die Anpassung der Meridiankontur mit Rücksprung 11 und Erhöhung 10 der Schaufeloberkante gegenüber dem Meridianverlauf M' sowie der Meridiankontur mit Rücksprung 14 und Erhöhung 13 der Gehäusewand 3 gegenüber dem Meridianverlauf M zu erkennen. Die schraffierten Flächen bestimmen die jeweilige Größe der Abweichungen gegenüber den stetigen Meridianverläufen M**,** M'. Zudem sind in Figur 3 auch die Kopfspaltbreite a, b bestimmt durch den Abstand zwischen der Schaufeloberkante der Schaufel 5 und der Gehäusewand 3 sowie die Kopfspaltlänge c zwischen den Anschlagflächen 9, 9' eingezeichnet, wobei in dem gezeigten Ausführungsbeispiel a>c>b. Die Erhöhung 14 der Gehäusewand 3 und der Rücksprung 11 der Schaufeloberkante sowie die Erhöhung 10 der Schaufeloberkante und der Rücksprung 13 der Gehäusewand 3 sind jeweils gleich, so dass die Kopfspaltbreiten a und b jeweils konstant bleiben.

In Figur 1 ist ferner die Meridianlänge L des Verdichterrads 4 von dessen ansaugseitiger Vorderkante 12 zu dessen ausblasseitiger Hinterkante 6 eingezeichnet, die zwischen den Werten 0<L<1 festgelegt wird, um zu bestimmen, dass der Z-förmige Verlauf gebildet durch die Rücksprunge 11, 13 und Erhöhungen 10, 14 in dem gezeigten Ausführungsbeispiel bei 0,47 liegt. Gemessen wird bei der mittleren Kopfspaltlänge c.

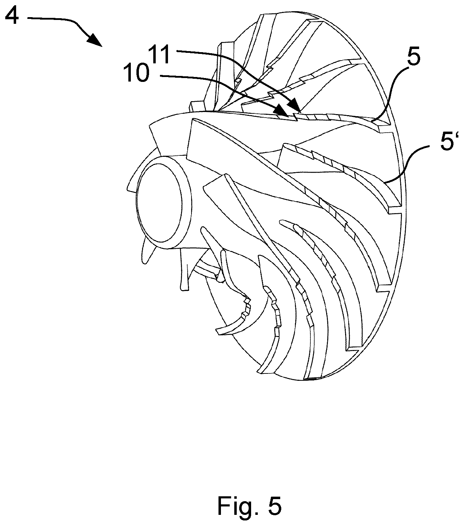

Die Figuren 4 und 5 zeigen unterschiedliche Ausführungsbeispiele von Verdichterrädern 4, wobei die Verdichterräder 4 jeweils Schaufeln 5 mit jeweils unterschiedlicher Axialerstreckung aufweisen, die in Umfangsrichtung abwechselnd zueinander angeordnet und in Umfangsrichtung gekrümmt sind. Die Schaufeln mit kürzerer Axialerstreckung bzw. Meridionalerstreckung sind als Zwischenschaufeln 5' zwischen den Schaufeln 5 mit größerer Axialerstreckung bzw. Meridionalerstreckung angeordnet. Der gekrümmte Verlauf der längeren Schaufeln 5 führt dazu, dass die Zwischenschaufeln 5' in axialer Projektion überdeckt werden. In den gezeigten Ausführungsbeispielen gemäß der Figuren 4 und 5 sind sowohl die Schaufeln 5 als auch die Zwischenschaufeln 5' mit den Erhöhung 10 und Rücksprung 11 ausgebildet, es können jedoch auch nur die Schaufeln 5 entsprechend geformt werden und die Zwischenschaufeln 5' eine stetige Meridiankontur aufweisen. Die Ausführung des Verdichterrads 4 gemäß Figur 5 unterscheidet sich dadurch, dass über den Meridianverlauf die unstetige Meridiankontur der Schaufeloberkanten mehrfach gebildet ist. Die Gehäusewand 3 wird dann entsprechend komplementär geformt.

Die gesamte Offenbarung gilt sowohl für Radialverdichterräder als auch für Diagonalverdichterräder.

## Patentansprüche

1. Turboverdichter (1) mit einem Verdichtergehäuse (2) und einem Verdichterrad (4) mit Schaufeln (5), wobei das Verdichterrad (4) drehbar gegenüber dem Verdichtergehäuse (2) gelagert und über einen Kopfspalt (7) zwischen abdeckfreien Schaufeloberkanten der Schaufeln (5) und einer den Schaufeloberkanten zuweisenden Verdichterwand (3) des Verdichtergehäuses (2) beabstandet ist, wobei sowohl die Schaufeloberkanten der Schaufeln (5) als auch die Gehäusewand (3) jeweils über ihre jeweilige Meridiankontur mindestens einen Rücksprung (11, 13) sowie mindestens eine Erhöhung (10, 14) aufweisen, die lokal zusammenwirken, so dass der Kopfspalt (7) im Bereich der Rücksprunge (11, 13) und der Erhöhungen (10, 14) in einer Meridianebene gesehen einen Z-förmigen Verlauf bestimmt, wobei die Gehäusewand (3) und die Schaufeln (5) jeweils aufeinander zugerichtete Anschlagflächen (9, 9') für eine Strömung durch den Kopfspalt (7) aufweisen, wobei die Anschlagflächen (9, 9') gegenüber einer Senkrechten zu einer Tangente (T) des Meridianverlaufs der Gehäusewand (3) und/oder der Schaufeloberkanten des Verdichterrads (4) parallel in einem Winkel α=±15° verlaufen.

2. Turboverdichter nach Anspruch 1, **dadurch gekennzeichnet, dass** eine Meridianlänge (L) des Verdichterrads von dessen ansaugseitiger Vorderkante (12) zu dessen ausblasseitiger Hinterkante (6) zwischen den Werten 0<L<1 bestimmt wird und der mindestens eine Rücksprung sowie die mindestens eine Erhöhung in einem Bereich 0,3<L<0,7, insbesondere 0,4<L<0,5 ausgebildet sind.

3. Turboverdichter nach einem der vorigen Ansprüche, **dadurch gekennzeichnet, dass** der Kopfspalt (7) eine konstante Kopfspaltbreite aufweist, wobei die Kopfspaltbreite durch den Abstand zwischen der Schaufeloberkante und der Gehäusewand bestimmt ist.

4. Turboverdichter nach einem der vorigen Ansprüche 1 oder 2, **dadurch gekennzeichnet, dass** der Kopfspalt (7) in einem an die ansaugseitige Schaufelkante (12) angrenzenden Abschnitt eine erste Kopfspaltbreite (a), in einem an die ausblasseitige Schaufelkante (6) angrenzenden Abschnitt eine zweite Kopfspaltbreite (b) und in einem im Bereich des Rücksprungs und der Erhöhung eine sich zwischen den Anschlagflächen erstreckende radiale Kopfspaltlänge (c) aufweist, wobei gilt: a<c<b.

5. Turboverdichter nach einem der vorigen Ansprüche 1 oder 2, **dadurch gekennzeichnet, dass** der Kopfspalt (7) in einem an die ansaugseitige Schaufelkante (12) angrenzenden Abschnitt eine erste Kopfspaltbreite (a), in einem an die ausblasseitige Schaufelkante (6) angrenzenden Abschnitt eine zweite Kopfspaltbreite (b) und in einem im Bereich des Rücksprungs und der Erhöhung eine sich zwischen den Anschlagflächen erstreckende radiale Kopfspaltlänge (c) aufweist, wobei gilt: a>c>b.

6. Turboverdichter nach einem der vorigen Ansprüche, **dadurch gekennzeichnet, dass** sowohl die Schaufeloberkanten der Schaufeln (5) als auch die Gehäusewand (3) jeweils über ihre jeweilige Meridiankontur mehrere Rücksprunge (11, 13) sowie mehrere Erhöhungen (10, 14) aufweisen, die jeweils lokal zusammenwirken, so dass der Kopfspalt (7) im Bereich der Rücksprünge und der Erhöhungen in der Meridianebene gesehen einen sich wiederholenden Z-förmigen Verlauf bestimmen.

7. Turboverdichter nach einem der vorigen Ansprüche, **dadurch gekennzeichnet, dass** das Verdichterrad (4) Schaufeln (5) mit jeweils unterschiedlicher Axialerstreckung aufweist, die in Umfangsrichtung abwechselnd zueinander angeordnet und in Umfangsrichtung gekrümmt sind.

8. Turboverdichter nach dem vorigen Anspruch, **dadurch gekennzeichnet, dass** die Schaufeln mit kürzerer Axialerstreckung als Zwischenschaufeln (5') zwischen Schaufeln (5) mit größerer Axialerstreckung angeordnet sind und die Schaufeln (5) mit größerer Axialerstreckung die Zwischenschaufeln (5') in einer ansaugseitigen axialen Draufsicht des Verdichterrads (4) überdecken.

9. Turboverdichter nach dem vorigen Anspruch, **dadurch gekennzeichnet, dass** zumindest oder ausschließlich die Schaufeln (5) mit größerer Axialerstreckung über ihre jeweilige Meridiankontur den mindestens einen Rücksprung (11) sowie die mindestens eine Erhöhung (10) aufweisen.

## Claims

1. Turbocompressor (1) with a compressor housing (2) and a compressor wheel (4) with blades (5), wherein the compressor wheel (4) is mounted rotatably relative to the compressor housing (2) and is spaced apart by a head gap (7) between cover-free blade upper edges of the blades (5) and a compressor wall (3) of the compressor housing (2) facing the blade upper edges, wherein both the blade upper edges of the blades (5) and the housing wall (3) each have at least one recess (11, 13) and at least one elevation (10, 14) over their respective meridian contour, which interact locally, so that the head gap (7) in the area of the recesses (11, 13) and the elevations (10, 14) defines a Z-shaped course when viewed in a meridian plane, wherein the housing wall (3) and the blades (5) each have stop surfaces (9, 9') directed towards one another for a flow through the head gap (7), wherein the stop surfaces (9, 9') run parallel at an angle α=±15° with respect to a perpendicular to a tangent (T) of the meridian course of the housing wall (3) and/or the blade upper edges of the compressor wheel (4).

2. Turbocompressor according to claim 1, **characterised in that** a meridian length (L) of the compressor wheel from its intake-side leading edge (12) to its exhaust-side trailing edge (6) is determined between the values 0<L<1 and the at least one recess and the at least one elevation are formed in a range 0.3<L<0.7, in particular 0.4<L<0.5.

3. Turbocompressor according to any one of the preceding claims, **characterised in that** the head gap (7) has a constant head gap width, wherein the head gap width is determined by the distance between the upper edge of the blade and the housing wall.

4. Turbocompressor according to one of the preceding claims 1 or 2, **characterised in that** the head gap (7) has a first head gap width (a) in a section adjacent to the intake-side blade edge (12), a second head gap width (b) in a section adjacent to the exhaust-side blade edge (6) and a radial head gap length (c) extending between the stop surfaces in the region of the recess and the elevation, where: a<c<b.

5. Turbocompressor according to one of the preceding claims 1 or 2, **characterised in that** the head gap (7) has a first head gap width (a) in a section adjacent to the intake-side blade edge (12), a second head gap width (b) in a section adjacent to the exhaust-side blade edge (6) and a radial head gap length (c) extending between the stop surfaces in the region of the recess and the elevation, where: a>c>b.

6. Turbocompressor according to any one of the preceding claims, **characterised in that** both the upper edges of the blades (5) and the housing wall (3) each have a plurality of recesses (11, 13) and a plurality of elevations (10, 14) over their respective meridian contour, which each interact locally, so that the head gap (7) determines a repeating Z-shaped course in the region of the recesses and the elevations in the meridian plane.

7. Turbocompressor according to any one of the preceding claims, **characterised in that** the compressor wheel (4) has blades (5) each with a different axial extent, which are arranged alternately to one another in the circumferential direction and are curved in the circumferential direction.

8. Turbocompressor according to any one of the preceding claims, **characterised in that** the blades with a smaller axial extent are arranged as intermediate blades (5') between blades (5) with a greater axial extent and the blades (5) with a greater axial extent cover the intermediate blades (5') in an intake-side axial plan view of the compressor wheel (4).

9. Turbocompressor according to any one of the preceding claims, **characterised in that** at least or exclusively the blades (5) with a larger axial extent over their respective meridian contour have the at least one recess (11) and the at least one elevation (10).

## Revendications

1. Turbocompresseur (1), comprenant un carter de compresseur (2) et une roue de compresseur (4) pourvue d'aubes (5), dans lequel la roue de compresseur (4) est montée rotative par rapport au carter de compresseur (2) et est espacée par un entrefer de tête (7) entre des bords supérieurs d'aube sans recouvrement des aubes (5) et une paroi de compresseur (3), tournée vers les bords supérieurs d'aube, du carter de compresseur (2), dans lequel à la fois les bords supérieurs d'aube des aubes (5) et la paroi de carter (3) présentent respectivement sur leur contour méridien respectif au moins un retrait (11, 13) ainsi qu'au moins un relief (10, 14) qui coopèrent localement de sorte que l'entrefer de tête (7), vu dans la zone des retraits (11, 13) et des reliefs (10, 14) dans un plan méridien, détermine un tracé en forme de Z, dans lequel la paroi de carter (3) et les aubes (5) présentent respectivement des surfaces de butée (9, 9') tournées les unes vers les autres pour un écoulement à travers l'entrefer de tête (7), dans lequel les surfaces de butée (9, 9') s'étendent par rapport à une verticale à une tangente (T) du tracé méridien de la paroi de carter (3) et/ou des bords supérieurs d'aube de la roue de compresseur (4) en parallèle à un angle α = ±15°.

2. Turbocompresseur selon la revendication 1, **caractérisé en ce qu'**une longueur méridienne (L) de la roue de compresseur est déterminée à partir de son bord d'attaque (12) côté admission jusqu'au bord de fuite (6) côté soufflage entre les valeurs 0 < L < 1, et ledit au moins un retrait ainsi que ledit au moins un relief sont réalisés dans une plage de 0,3 < L < 0,7, en particulier de 0,4 < L < 0,5.

3. Turbocompresseur selon l'une quelconque des revendications précédentes, **caractérisé en ce que** l'entrefer de tête (7) présente une largeur d'entrefer de tête constante, la largeur d'entrefer de tête étant déterminée par l'espacement entre le bord supérieur d'aube et la paroi de carter.

4. Turbocompresseur selon l'une quelconque des revendications précédentes 1 ou 2, **caractérisé en ce que** l'entrefer de tête (7) présente dans une partie adjacente au bord d'aube (12) côté admission une première largeur d'entrefer de tête (a), dans une partie adjacente au bord d'aube (6) côté soufflage une deuxième largeur d'entrefer de tête (b) et dans une zone du retrait ou du relief une longueur d'entrefer de tête radiale (c) s'étendant entre les surfaces de butée, où : a < c < b.

5. Turbocompresseur selon l'une quelconque des revendications précédentes 1 ou 2, **caractérisé en ce que** l'entrefer de tête (7) présente dans une partie adjacente au bord d'aube (12) côté admission une première largeur d'entrefer de tête (a), dans une partie adjacente au bord d'aube (6) côté soufflage une deuxième largeur d'entrefer de tête (b) et dans une zone du retrait et du relief une longueur de tête radiale (c) s'étendant entre les surfaces de butée, où : a > c > b.

6. Turbocompresseur selon l'une quelconque des revendications précédentes, **caractérisé en ce qu'**à la fois les bords supérieurs d'aube des aubes (5) et la paroi de carter (3) présentent respectivement sur leur contour méridien respectif plusieurs retraits (11, 13) ainsi que plusieurs reliefs (10, 14) qui coopèrent respectivement localement de sorte que l'entrefer de tête (7), vu dans la zone des retraits et des reliefs dans le plan méridien, détermine un tracé en forme de Z répétitif.

7. Turbocompresseur selon l'une quelconque des revendications précédentes, **caractérisé en ce que** la roue de compresseur (4) présente des aubes (5) d'une étendue axiale respectivement différente, qui sont disposées dans la direction circonférentielle en alternance les unes avec les autres et sont courbées dans la direction circonférentielle.

8. Turbocompresseur selon la revendication précédente, **caractérisé en ce que** les aubes ayant une étendue axiale plus courte sont disposées en tant qu'aubes intermédiaires (5') entre des aubes (5) ayant une étendue axiale plus grande, et les aubes (5) ayant une étendue axiale plus grande recouvrent les aubes intermédiaires (5') dans une vue de dessus axiale côté admission de la roue de compresseur (4).

9. Turbocompresseur selon la revendication précédente, **caractérisé en ce qu'**au moins ou exclusivement les aubes (5) ayant une étendue axiale plus grande présentent sur leur contour méridien respectif ledit au moins un retrait (11) ainsi qu'au moins un relief (10).
